# EUROPEAN PATENT APPLICATION

(11) **EP 4 757 015 A1**
(43) Date of publication of application: **10.06.2026**
(21) Application number: 25205287.3
(22) Date of filing: 29.09.2025
(51) Int. Cl.: H01M 50/152, H01M 50/164, H01M 50/188, H01M 50/193, H01M 50/593, H01M 50/559

(54) **CAP ASSEMBLY, SECONDARY BATTERY INCLUDING SAME, AND METHOD FOR MANUFACTURING CAP ASSEMBLY**

(30) Priority: 03.12.2024 KR 20240177298
(71) Applicant: SAMSUNG SDI CO., LTD., Yongin-si, Gyeonggi-do 17084 (KR)
(72) Inventor: Jang, Taewoong, 17084 Yongin-si, Gyeonggi-do (KR)
(74) Representative: Meissner Bolte Partnerschaft mbB

(57) **Abstract**

The present invention provides a cap assembly (210), a secondary battery including the same, and a method for manufacturing the cap assembly (210). The cap assembly (210) includes a cap plate (212) having a through hole and including a coating layer (213) disposed on at least a portion of an upper surface thereof, a terminal plate (216) including a body part (216a) and an inserting part (216b) which protrudes from the body part (216a) and is inserted into the through hole, an insulator (214) interposed between the cap plate (212) and the terminal plate (216), and a filler (219) disposed in at least a portion of a space in which the inserting part (216b) inserted into the through hole is surrounded with the insulator (214) and the cap plate (212).

## Description

### BACKGROUND

### FIELD

Aspects of the present invention relate to a cap assembly and a method for manufacturing the cap assembly.

### DESCRIPTION OF THE RELATED ART

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A secondary battery may be manufactured by inserting an electrode assembly into a case and then injecting an electrolyte into the case. Some types of secondary batteries may be manufactured by sealing the case in which the electrode assembly and the electrolyte are accommodated with a cap assembly. After charging and discharging the secondary battery, a portion of the electrolyte which is not introduced into an electrode side may be isolated in the cap assembly. Due to the isolated electrolyte, a metal may be precipitated from a coating layer plated on a component of the cap assembly. Due to the precipitated metal, short circuit may occur in the secondary battery, and thus a voltage of the secondary battery may be dropped.

The above information disclosed in this Background section is for enhancement of understanding of the background of the present invention, and therefore, it may contain information that does not constitute related (or prior) art.

### SUMMARY

The present invention has been proposed to solve the above technical problems, and aspects of embodiments of the present invention are to provide a cap assembly, a secondary battery including the same, and a method for manufacturing the cap assembly.

These and other aspects and features of the present invention will be described in or will be apparent from the following description of embodiments of the present invention.

In order to solve the technical problem, a cap assembly according to the present invention includes a cap plate having a through hole, and including a coating layer disposed on at least a portion of an upper surface thereof, a terminal plate including a body part and an inserting part which protrudes from the body part and is inserted into the through hole, an insulator interposed between the cap plate and the terminal plate, and a filler disposed in at least a portion of a space in which the inserting part inserted into the through hole is surrounded with the insulator and the cap plate.

According to one or more embodiments, the coating layer may include nickel (Ni).

According to one or more embodiments, the filler may be in contact with at least a portion of an inner side surface of the insulator and at least a portion of the upper surface of the cap plate, and may surround at least a portion of a side surface of the inserting part.

According to one or more embodiments, a lower end of the filler may be positioned to correspond to an upper end of the cap plate.

According to one or more embodiments, the filler may be further disposed to be in contact with at least a portion of an inner side surface of the cap plate and to surround at least a portion of the side surface of the inserting part.

According to one or more embodiments, a lower end of the filler may be positioned to correspond to a lower end of the cap plate.

According to one or more embodiments, the filler may include at least one of an epoxy resin, polypropylene (PP), polyethylene terephthalate (PET), and polystyrene (PS).

According to one or more embodiments, the cap assembly may further include an insulating washer disposed on a lower side of the cap plate, wherein an inner end of the insulating washer may be positioned to correspond to an inner end of the cap plate.

According to one or more embodiments, the cap assembly may further include an insulating washer disposed on a lower side of the cap plate, wherein an inner end of the insulating washer may be positioned in an inner side of an inner end of the cap plate.

A secondary battery according to a preferred embodiment includes an electrode assembly, a case which includes a bottom part, a sidewall part coupled to the bottom part, and an opening facing the bottom part, and the electrode assembly is accommodated therein, and a cap assembly coupled with one end of the sidewall part of the case to seal the opening, wherein the cap assembly includes, a cap plate having a through hole and including a coating layer disposed on at least a portion of an upper surface thereof, a terminal plate including a body part and an inserting part which protrudes from the body part and is inserted into the through hole, an insulator interposed between the cap plate and the terminal plate, and a filler disposed in at least a portion of a space in which the inserting part inserted into the through hole is surrounded with the insulator and the cap plate.

According to one or more embodiments, the filler may be in contact with at least a portion of an inner side surface of the insulator and at least a portion of the upper surface of the cap plate, and may surround at least a portion of a side surface of the inserting part.

According to one or more embodiments, a lower end of the filler may be positioned to correspond to an upper end of the cap plate.

According to one or more embodiments, the filler may be further disposed to be in contact with at least a portion of an inner side surface of the cap plate and to surround at least a portion of the side surface of the inserting part.

According to one or more embodiments, a lower end of the filler may be positioned to correspond to a lower end of the cap plate.

According to one or more embodiments, the cap assembly may further include an insulating washer disposed on a lower side of the cap plate, and wherein an inner end of the insulating washer may be positioned to correspond to an inner end of the cap plate.

According to one or more embodiments, the cap assembly may further include an insulating washer disposed on a lower side of the cap plate, and wherein an inner end of the insulating washer may be positioned in an inner side of an inner end of the cap plate.

According to one or more embodiments, the secondary battery may include a coin cell or a button cell.

According to one or more embodiments, a material for the case may include stainless use steel (SUS).

In order to solve the technical problem, a method for manufacturing a cap assembly according to the present invention includes interposing an insulator between a cap plate in which a through hole is formed and a terminal plate including an inserting part which protrudes to be inserted into the through hole, coupling the cap plate and the terminal plate by pressing the cap plate and the terminal plate with the insulator interposed therebetween, and disposing a filler in at least a portion of a space in which the inserting part inserted into the through hole is surrounded with the insulator and the cap plate.

According to one or more embodiments, the disposing of the filler may include forming the filler by applying and hardening a filler material to the at least a portion of the space in which the inserting part inserted into the through hole is surrounded with the insulator and the cap plate.

According to some embodiments of the present invention, a cap assembly with improved safety, a secondary battery including the same, and a method for manufacturing the cap assembly may be provided.

According to some embodiments of the present invention, a cap assembly capable of preventing an electrolyte from being isolated in a partial space thereof in advance, a secondary battery including the same, and a method for manufacturing the cap assembly may be provided.

According to some embodiments of the present invention, metal precipitation may be prevented by blocking contact between an electrolyte and a coating layer configured of nickel through a filler in advance, and thus the risks that short circuit may occur in the secondary battery may be reduced.

However, aspects and features of the present invention are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present invention and further describe aspects and features of the present invention together with the detailed description of the present invention. Thus, the present invention should not be construed as being limited to the drawings:
FIG. 1 is a perspective view illustrating an example of a secondary battery according to some embodiments of the present invention.
FIG. 2 is a cross-sectional view illustrating an example of a secondary battery according to some embodiments of the present invention.
FIG. 3 is an exploded perspective view illustrating an example of a cap assembly before a filler is disposed according to some embodiments of the present invention.
FIG. 4 is a perspective view illustrating an example of a cap assembly before a filler is disposed according to some embodiments of the present invention.
FIG. 5 is a cross-sectional view illustrating an example of a cap assembly including a filler and an insulating washer according to first embodiments of the present invention.
FIG. 6 is a cross-sectional view illustrating an example of a cap assembly including a filler and an insulating washer according to second embodiments of the present invention.
FIG. 7 is a cross-sectional view illustrating an example of a cap assembly including a filler and an insulating washer according to third embodiments of the present invention.
FIG. 8 is a cross-sectional view illustrating an example of a cap assembly including a filler and an insulating washer according to fourth embodiments of the present invention.
FIG. 9 is a diagram illustrating an example of a method for manufacturing a cap assembly according to some embodiments of the present invention.
FIG. 10 is a diagram illustrating an example of preventing a metal from being precipitated in a cap assembly according to some embodiments of the present invention.
FIG. 11 is a flowchart illustrating an example of a method for manufacturing a cap assembly according to some embodiments of the present invention.

### DETAILED DESCRIPTION

Hereinafter, embodiments of the present invention will be described, in detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term to explain his/her invention in the best way.

The embodiments described in this specification and the configurations shown in the drawings are only some of the embodiments of the present invention and do not represent all of the technical spirit, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

lt will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present invention, dimensions and relative dimensions of layers and regions illustrated in drawings may be exaggerated for clarity of explanation. That is, the dimensions illustrated in drawings are only for convenience of understanding and are not limited thereto. Further, the same reference numerals throughout the specification designate the same elements.

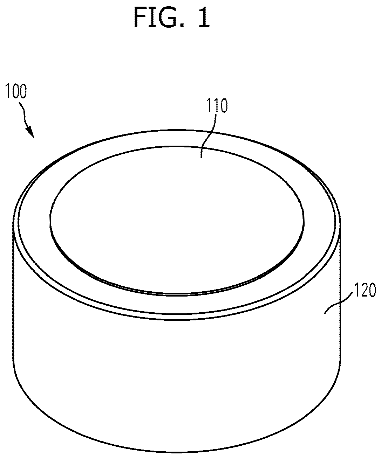

FIG. 1 is a perspective view illustrating an example of a secondary battery according to some embodiments of the present invention.

Referring to FIG. 1, a secondary battery 100 may include a cap assembly 110 and a case 120.

The secondary battery 100 may be a coin type secondary battery or a button type secondary battery. For example, the secondary battery 100 may have a cylindrical shape. However, the secondary battery 100 is not limited thereto, and the secondary battery may be a prismatic type secondary battery, a pouch type secondary battery, a cylindrical type secondary battery, and the like. In some embodiments, the secondary battery 100 may be a chargeable and rechargeable secondary battery.

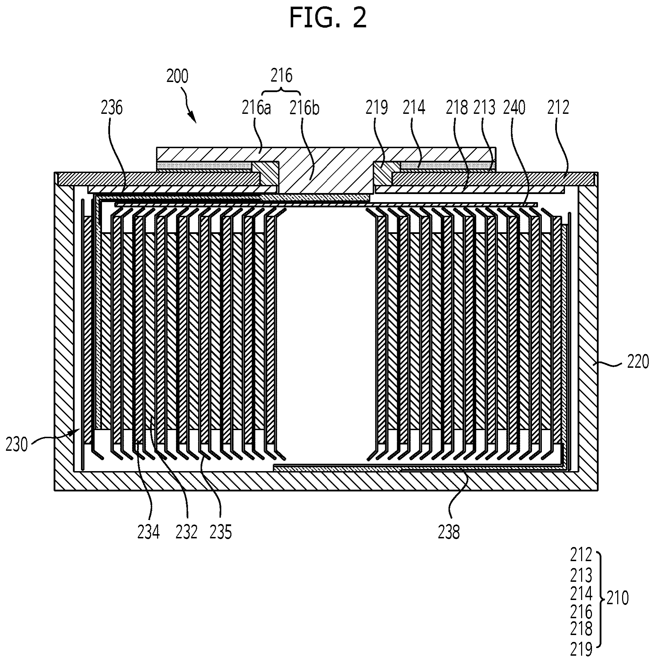

The case 120 may accommodate an electrode assembly (see 230 of FIG. 2). The electrode assembly 230 may be inserted into the case 120 through an opening formed in one side of the case 120. Then, the opening of the case 120 may be sealed with the cap assembly 110. The opening of the case 120 may be sealed with the cap assembly 110 through welding. The cap assembly 110 may be joined with one end of a sidewall part of the case 120 to seal the opening.

FIG. 2 is a cross-sectional view illustrating an example of a secondary battery according to some embodiments of the present invention.

Referring to FIG. 2, the secondary battery 200 may include a cap assembly 210, a case 220, and the electrode assembly 230.

The cap assembly 210 may include a cap plate 212, a coating layer 213, an insulator 214, a terminal plate 216, an insulating washer 218, a filler 219, and the like. The cap plate 212 may cover the opening of the case 220. The cap plate 212 may be joined with a side of the case 220 corresponding to a side of the opening.

In some embodiments, the cap plate 212 may include a through hole which is formed therein, and a coating layer 213 which is disposed on at least a portion of an upper surface thereof. For example, the through hole may be formed in a center of the cap plate 212. The terminal plate 216 may be inserted into the through hole and joined with the cap plate 212.

In some embodiments, the terminal plate 216 may include a body part 216a disposed on the cap plate 212 and an inserting part 216b protruding from the body part 216a. For example, the inserting part 216b of the terminal plate 216 may be inserted into the through hole of the cap plate 212. The inserting part 216b of the terminal plate 216 may be in contact with a first electrode tab 236 to be coupled thereto.

In some embodiments, the insulator 214 may be interposed between the cap plate 212 and the terminal plate 216. The insulator 214 may have an adhesion to join the terminal plate 216 and the cap plate 212. The insulator 214 may include an adhesive material for joining the terminal plate 216 and the cap plate 212. For example, adhesive layers may be disposed on both surfaces of the insulator 214 to join the terminal plate 216 and the cap plate 212. The insulator 214 may be formed of an insulating material to electrically insulate between the terminal plate 216 and the cap plate 212.

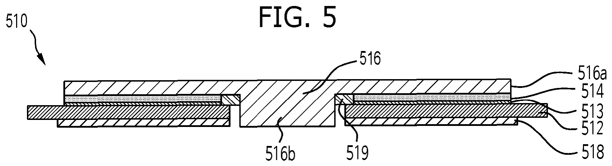

In some embodiments, the filler 219 may be disposed in at least a portion of a space in which the inserting part 216b of the terminal plate 216, which is inserted into the through hole of the cap plate 212, is surrounded with the insulator 214 and the cap plate 212. The arrangement of the filler 219 will be described later in detail with reference to FIGS. 5 to 8.

The case 220 may accommodate the electrode assembly 230 and the electrolyte and form an outer appearance of the secondary battery with the cap assembly 210. The case 220 may include a sidewall part substantially having a cylindrical shape and a bottom part coupled to one side of the sidewall part. However, the case 220 is not limited thereto, and the case 220 may be configured in various shapes, for example, a circular shape, a pouch shape, and the like. The case 220 may be configured of a metal such as stainless use steel (SUS), aluminum (Al), an aluminum alloy, and nickel-plated steel, a laminated film or plastic forming a pouch, and the like.

The electrode assembly 230 may include a first electrode 232, a second electrode 234, and a separator 235, and may further include a first electrode tab 236 coupled to the first electrode 232 and a second electrode tab 238 coupled to the second electrode 234. The first electrode tab 236 may be coupled to the cap assembly 210 and the second electrode tab 238 may be coupled to the bottom part of the case 220.

The first electrode 232 may include a first base material, a first uncoated portion formed on the first base material, and the first electrode tab 236 coupled to one surface of the first uncoated portion. The first electrode 232 may include a first active material layer coated with a first active material. The first electrode tab 236 may extend outwardly from the first uncoated portion of the first base material on which the first active material is not coated, and may be electrically coupled to the terminal plate 216 of the cap assembly 210.

The second electrode 234 may include a second base material, a second uncoated portion formed on the second base material, and the second electrode tab 238 coupled to one surface of the second uncoated portion. The second electrode 234 may include a second active material layer coated with a second active material. The second electrode tab 238 may extend outwardly from the second uncoated portion of the second base material on which the second active material is not coated, and may be electrically coupled to the case 230.

Each of the first electrode tab 236 and the second electrode tab 238 may be covered with a cover tape. The cover tape may include an insulating material. For example, the insulating material may provide electrical insulation and may not allow current to pass therethrough. Short circuit in the first electrode tab 236 and the second electrode tab 238 may be prevented by the cover tape.

The first electrode 232 may serve as a positive electrode. For example, the first base material may be configured of an aluminum foil, and the first active material may include a transition metal oxide.

A positive electrode plate for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode plate may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but is not limited thereto.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiaA1-bXbO2-cDc (0.90≤a≤1.8, 0≤b≤0.5, and 0≤c≤0.05); LiaMn2-bXbO4-cDc (0.90≤a≤1.8, 0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αDα (0.90≤a≤1.8, 0≤b≤0.5, 0≤c≤0.5, and 0<α<2); LiaNibCocL1dGeO2 (0.90≤a≤1.8, 0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery. The second electrode 234 may serve as a negative electrode. For example, the second base material may be configured of a copper foil or a nickel foil, and the second active material may include graphite.

The negative electrode plate for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The negative current collector may include a copper foil, a nickel foil, a stainless steel foil, a titanium foil, a nickel foam, a copper foam, a polymer substrate coated with a conductive metal, or a combination thereof.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The separator 235 may allow lithium ions to move between the first electrode and the second electrode and simultaneously serve to prevent short circuit between the first electrode and the second electrode. For example, the separator may be configured of a polyethylene film, a polypropylene film, a polyethylene-polypropylene film, and the like, but the present invention is not limited thereto.

The separator 235 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 235 may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and a combination thereof, but is not limited thereto.

The organic material and the inorganic material may be mixed in one coating layer, or a coating layer including an organic material and a coating layer including an inorganic material may be stacked.

FIG. 2 is a schematic diagram illustrating an example of a winding structure of the winding type electrode assembly 230, and the number, size, and structure of an electrode plate are not limited thereto. The outermost periphery of the electrode assembly 230 may be finished with the first electrode 232 or the second electrode 234. The first electrode tab 236 and the second electrode tab 238 of the electrode assembly 230 may be formed in different sides of the electrode assembly 230 from each other.

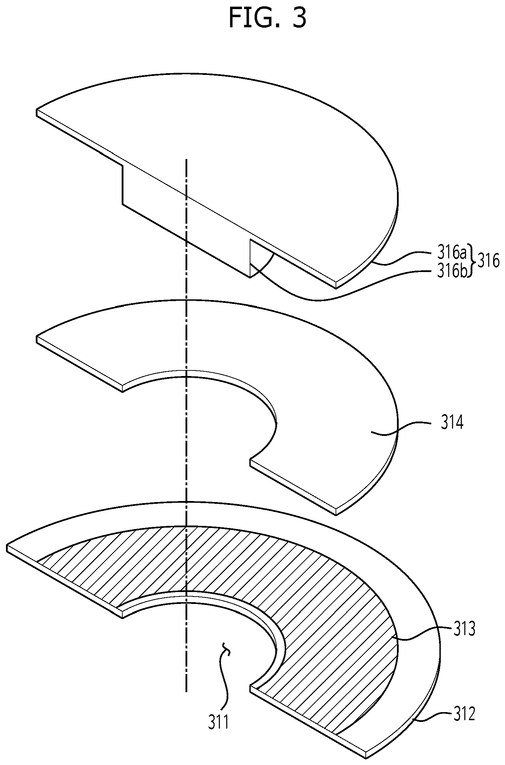

FIG. 3 is an exploded perspective view illustrating an example of a cap assembly before a filler is disposed according to some embodiments of the present invention. So as to describe a coupling relationship between components included in the cap assembly in detail, FIG. 3 illustrates half of the components of the cap assembly before the filler and an insulating washer are disposed.

Referring to FIG. 3, before the filler and the insulating washer are disposed, the cap assembly may include a cap plate 312, an insulator 314, and a terminal plate 316.

In some embodiments, the cap plate 312 may include a through hole 311 and include a coating layer 313 disposed on at least a portion of an upper surface thereof. The cap plate 312 may include stainless use steel (SUS), but the present invention is not limited thereto. The through hole 311 may be formed in a center of the cap plate 312. An inserting part 316b of the terminal plate 316 may be inserted into the through hole 311. A diameter of the through hole 311 may be larger than a diameter of the inserting part 316b. Accordingly, at least a portion of the inserting part 316b may be exposed through the through hole 311.

In some embodiments, the coating layer 313 may be configured of a material for improving coupling between the cap plate 312 and the insulator 314. When the insulator 314 including a polymer material and the cap plate 312 including a metal are pressed, the coating layer 313 may include a metal for improving the coupling. In relation to the above-described property, the coating layer 313 may include at least any one of nickel (Ni), chromium (Cr), titanium (Ti), copper (Cu), palladium (Pd), and zinc (Zn). For example, the coating layer 313 may be formed by plating nickel (Ni) to at least a portion of the upper surface of the cap plate 312. The coating layer 313 may be disposed to be positioned between the cap plate 312 and the insulator 314. Accordingly, the coupling between the cap plate 312 and the insulator 314 may be improved, and thus the coupling between the components of the cap assembly may be improved.

In some embodiments, the terminal plate 316 may include a body part 316a and the inserting part 316b which protrudes from the body part 316a and is inserted into the through hole 311. A center of the inserting part 316b may coincide with a center of the terminal plate 316. The terminal plate 316 may include aluminum (Al), but the present invention is not limited thereto.

In some embodiments, the insulator 314 may be interposed between the cap plate 312 and the terminal plate 316. A hole may be formed in a center of the insulator 314, and the inserting part 316b may pass through the hole of the insulator 314. A diameter of the hole of the insulator 314 may be larger than the diameter of the inserting part 316b.

In some embodiments, the hole of the insulator 314 may face the through hole 311. The diameter of the hole of the insulator 314 may be larger than the diameter of the through hole 311. In other embodiments, the diameter of the hole of the insulator 314 may be the same as the diameter of the through hole 311.

In some embodiments, the insulator 314 may include a polymer material. The polymer material may have high chemical stability and high corrosion resistance, and may block electrical conductivity to electrically insulate between the cap plate 312 and the terminal plate 316. In relation to the above-described property, a material for the insulator 314 may include at least any one of polypropylene (PP), polyamide (PA), polyimide(PI), a ceramic-coated insulator, and polyethylene terephthalate (PET).

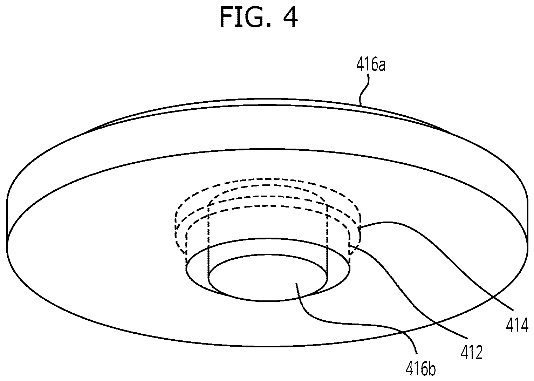

FIG. 4 is a perspective view illustrating an example of a cap assembly before a filler is disposed according to some embodiments of the present invention. FIG. 4 is a perspective view illustrating an example of the cap assembly before the filler and an insulating washer are disposed when viewed in a lower side.

As illustrated in FIG. 4, before the filler is disposed, the cap assembly may have a space in which an inserting part 416b inserted into a through hole is surrounded with an insulator 414 and a cap plate 412.

After charging and discharging a secondary battery, an electrolyte, which is not introduced into an electrode side, may be isolated in the space in which the inserting part 416b inserted into the through hole is surrounded with the insulator 414 and the cap plate 412. Due to the isolated electrolyte, a metal may be precipitated from a coating layer plated to an upper surface of the cap plate 412. Therefore, short circuit may occur in a secondary battery due to the precipitated metal, and thus a voltage of the secondary battery may be dropped.

To prevent the electrolyte from being isolated in the above-described space, the filler and the insulating washer may be disposed. Hereinafter, detailed description for the filler and the insulating washer will be made.

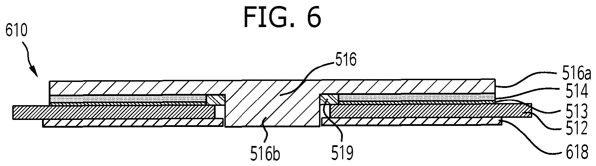

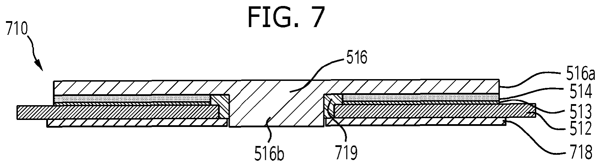

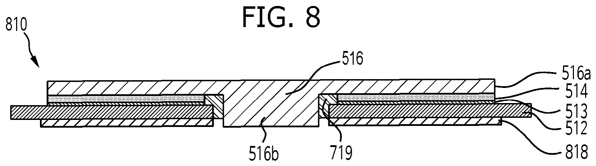

FIG. 5 is a cross-sectional view illustrating an example of a cap assembly including a filler and an insulating washer according to first embodiments of the present invention. FIG. 6 is a cross-sectional view illustrating an example of a cap assembly including a filler and an insulating washer according to second embodiments of the present invention. FIG. 7 is a cross-sectional view illustrating an example of a cap assembly including a filler and an insulating washer according to third embodiments of the present invention. FIG. 8 is a cross-sectional view illustrating an example of a cap assembly including a filler and an insulating washer according to fourth embodiments of the present invention. The cap assemblies other than the fillers and the insulating washers according to the first to fourth embodiments may be the same as the cap assembly 210 in FIG. 2. For example, a cap plate 512, a coating layer 513, an insulator 514, and a terminal plate 516 in FIGS. 5 to 8 may be understood based on the descriptions for FIGS. 2 and 3. The description for the cap assemblies in FIGS. 5 to 8 will be centered on the filler and insulating washer.

Referring to FIG. 5, a filler 519 may be disposed in at least a portion of a space in which an inserting part 516b inserted into a through hole is surrounded with the insulator 514 and the cap plate 512.

In some embodiments, the filler 519 may include a polymer series material which non-reacts with the electrolyte and has an insulating property. For example, the filler 519 may include at least any one of an epoxy resin, polypropylene (PP), polyethylene terephthalate (PET), and polystyrene (PS). In this example, the filler 519 may be formed by applying and then hardening an epoxy resin to the at least a portion of the space in which the inserting part 516b inserted into the through hole is surrounded with the insulator 514 and the cap plate 512. Accordingly, the filler 519 may be easily disposed, and thus a manufacturing time and cost of a cap assembly 510 may be reduced.

In some embodiments, the filler 519 may be in contact with at least a portion of an inner side surface of the insulator 514 and at least a portion of an upper surface of the cap plate 512, and may surround at least a portion of a side surface of the inserting part 516b. Accordingly, the isolation of the electrolyte in the inner surface of the insulator 514 and the upper surface of the cap plate 512 may be blocked in advance, and thus the metal precipitation may be prevented.

In some embodiments, a lower end of the filler 519 may be disposed to correspond to an upper end of the cap plate 512. Here, the phrase "correspond to" may mean that a height of the lower end of the filler 519 is the same as a height of the upper end of the cap plate 512 or is substantially the same as the height of the upper end of the cap plate 512 within a certain error range. In other embodiments, the height of the lower end of the filler 519 may be positioned lower than the height of the upper end of the cap plate 512.

In some embodiments, the cap assembly 510 may further include an insulating washer 518 disposed on a lower side of the cap plate 512, and an inner end of the insulating washer 518 may be positioned to correspond to an inner end of the cap plate 512. Here, the phrase "correspond to" may mean that a position of the inner end of the insulating washer 518 is the same as a position of the inner end of the cap plate 512 or is substantially the same as the position of the inner end of the cap plate 512 within a certain error range.

Referring to FIG. 6, a cap assembly 610 may further include an insulating washer 618 disposed on the lower side of the cap plate 512, and an inner end of the insulating washer 618 may be positioned in an inner side of the inner end of the cap plate 512. Here, the phrase "inner side" may mean a direction approaching the inserting part 516b. Accordingly, the electrolyte may be prevented from being introduced into the space in which the inserting part 516b inserted into the through hole is surrounded with the insulator 514 and the cap plate 512.

Referring to FIG. 7, a filler 719 may be further disposed to be in contact with at least a portion of the inner side surface of the cap plate 512 and to surround at least a portion of the side surface of the inserting part 516b. Accordingly, the electrolyte may be certainly prevented from being introduced into the space in which the inserting part 516b inserted into the through hole is surrounded with the insulator 514 and the cap plate 512.

In some embodiments, a lower end of the filler 719 may be disposed to correspond to a lower end of the cap plate 512. Here, the phrase "correspond to" may mean that a height of the lower end of the filler 719 is the same as a height of the lower end of the cap plate 512 or is substantially the same as the height of the lower end of the cap plate 512 within a certain error range.

In some embodiments, the cap assembly 710 may further include an insulating washer 718 disposed on the lower side of the cap plate 512, and an inner end of the insulating washer 718 may be positioned in an inner side more than the inner end of the cap plate 512.

Referring to FIG. 8, a cap assembly 810 may further include an insulating washer 818 disposed on the lower side of the cap plate 512, and an inner end of the insulating washer 818 may be positioned to correspond to the inner end of the cap plate 512.

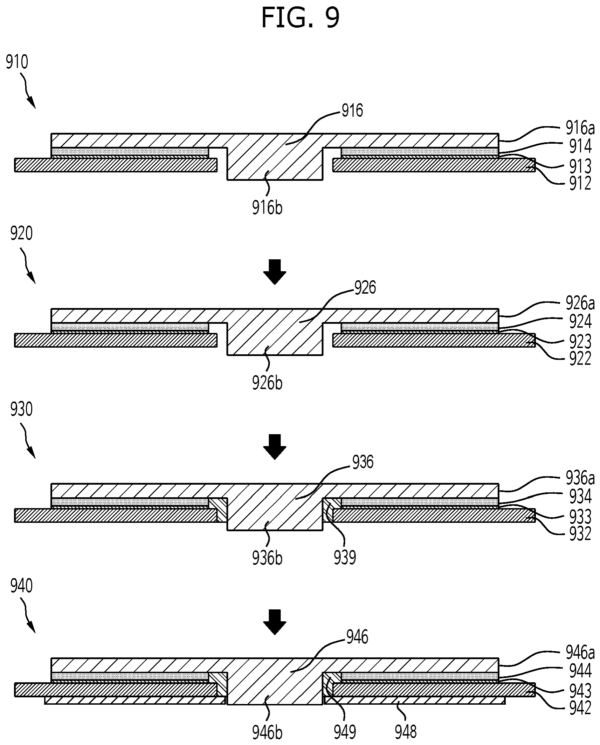

FIG. 9 is a diagram illustrating an example of a method for manufacturing a cap assembly according to some embodiments of the present invention. Description for configurations of the cap assembly illustrated in FIG. 9 which overlap the configurations of the cap assemblies described in FIGS. 2 to 8 will be omitted.

Referring to FIG. 9, a first example 910 may be a cross-sectional view illustrating an example that an insulator 914 is interposed between a cap plate 912 and a terminal plate 916. In some embodiments, a through hole may be formed in the cap plate 912, and the terminal plate 916 may include an inserting part 916b which protrudes to be inserted into the through hole. A hole may be formed in a center of the insulator 914 and the inserting part 916b may pass through the hole of the insulator 914.

A second example 920 may be a cross-sectional view illustrating an example that a cap plate 922 and a terminal plate 926 are pressed with an insulator 924 interposed therebetween. Press equipment may be used in a pressing process. A thickness of the insulator 924 may be reduced by the pressing process. In some embodiments, a coating layer 923 may be formed by plating nickel (Ni) onto at least a portion of an upper surface of the cap plate 922. The coating layer 923 may be disposed to be positioned between the cap plate 922 and the insulator 924. Accordingly, the coupling between the cap plate 922 and the insulator 924 may be improved, and thus the coupling between the components of the cap assembly may be improved.

A third example 930 may be a cross-sectional view illustrating an example that a filler 939 is disposed in at least a portion of a space in which an inserting part 936b inserted into a through hole is surrounded with an insulator 934 and a cap plate 932. In some embodiments, the filler 939 may be in contact with at least a portion of an inner side surface of the insulator 934, at least a portion of an upper surface of the cap plate 932, and at least a portion of an inner side surface of the cap plate 932, and may surround at least a portion of a side surface of the inserting part 936b. In some embodiments, the filler 939 may be formed by applying and then hardening an epoxy resin to the at least a portion of the space in which the inserting part 936b inserted into the through hole is surrounded with the insulator 934 and the cap plate 932.

A fourth example 940 is a cross-sectional view illustrating an example that an insulating washer 948 is disposed on a lower side of a cap plate 942. In some embodiments, an inner end of the insulating washer 948 may be disposed in an inner side of an inner end of the cap plate 942.

As described above, the cap assembly, in which the filler is disposed, according to the present invention may be manufactured by adding a process which applies and then hardens an epoxy resin to the prior manufacturing process of the cap assembly. Accordingly, the manufacturing process may be simplified, and thus the manufacturing time and coat of the cap assembly may be reduced.

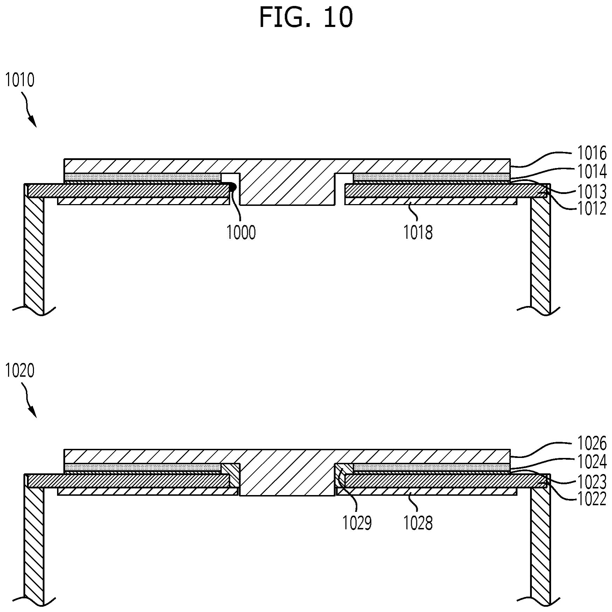

FIG. 10 is a diagram illustrating an example of preventing a metal from being precipitated in a cap assembly according to some embodiments of the present invention.

Referring to FIG. 10, a first example 1010 may illustrate a configuration of a cap assembly of a secondary battery which has no filler and is joined with a case so that an inserting part of a terminal plate 1016 faces an electrode assembly. The cap assembly may include a terminal plate 1016 coupled to a positive electrode and a cap plate 1012 coupled to a negative electrode. The cap assembly may include a coating layer 1013 disposed on at least a portion of an upper surface of the cap plate 1012. The coating layer 1013 may be a metal layer formed through nickel (Ni) plating. The cap assembly may include an insulator 1014 disposed between the terminal plate 1016 and the cap plate 1012. The insulator 1014 may prevent short circuit between the terminal plate 1016 and the cap plate 1012.

In the first example 1010, an electrolyte may be isolated in a space in which the inserting part of the terminal plate 1016 is surrounded with the insulator 1014 and the cap plate 1012. For example, when the cap plate 1012 serves as the negative electrode, the coating layer 1013 may not form a negative potential due to the electrolyte which is not introduced into a positive electrode side and is isolated, and thus a metal 1000 may be precipitated. The metal 1000 may include nickel (Ni). Accordingly, the short circuit may occur between the cap plate 1012 and the terminal plate 1016 due to the precipitated metal 1000, and thus a voltage of the secondary battery may be rapidly dropped.

A second example 1020 illustrates an example of a cap assembly having the same configuration as the cap assembly described with reference to FIG. 7. A terminal plate 1026 may be coupled to a positive electrode, and a cap plate 1022 may be coupled to a negative electrode. A filler 1029 may be disposed in a space in which an inserting part of the terminal plate 1026 is surrounded with an insulator 1024 and the cap plate 1022. The cap assembly may include an insulating washer 1028 disposed on a lower side of the cap plate 1022, and an inner end of the insulating washer 1028 may be positioned in an inner side more than an inner end of the cap plate 1022.

The second example 1020 may prevent the electrolyte from being introduced into the space, in which the inserting part of the terminal plate 1026 is surrounded with the insulator 1024 and the cap plate 1022, in advance. For example, contact between the electrolyte and a coating layer 1023 configured of nickel (Ni) may be blocked by the filler 1029 in advance. Accordingly, the metal precipitation may be prevented so that the short circuit between the terminal plate 1026 and the cap plate 1022 may not be caused. The secondary battery according to the present invention may be relatively safe due to reduction in risk for occurrence of short circuit.

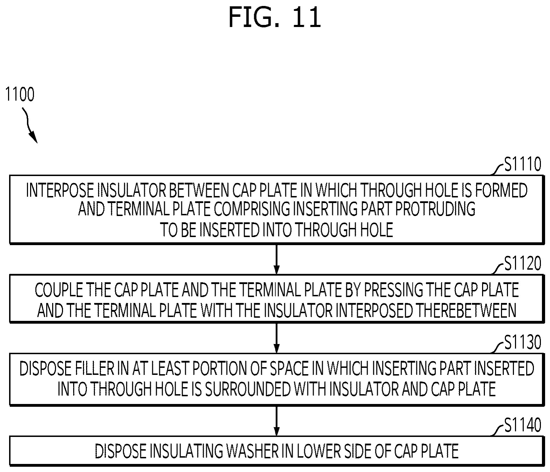

FIG. 11 is a flowchart illustrating an example of a method for manufacturing a cap assembly according to some embodiments of the present invention.

Referring to FIG. 11, a manufacturing method 1100 of a cap assembly may start to interpose an insulator between a cap plate in which a through hole is formed and a terminal plate including an inserting part which protrudes to be inserted into the through hole (S1110). For example, the cap plate may include the through hole, and include a coating layer disposed on at least a portion of an upper surface thereof. The cap plate may include stainless use steel (SUS), but the present invention is not limited thereto. The through hole may be formed in a center of the cap plate. The inserting part of the terminal plate may be inserted into the through hole. A diameter of the through hole may be larger than a diameter of the inserting part. Accordingly, at least a portion of the inserting part may be exposed through the through hole. In some embodiments, the coating layer may be configured of a material for enhancing coupling between the cap plate and the insulator. When the insulator including a polymer material and the cap plate including a metal are pressed, the coating layer may include a metal to enhance the coupling. In relation to the above-described property, the coating layer may include at least any one of nickel (Ni), chromium (Cr), titanium (Ti), copper (Cu), palladium (Pd), and zinc (Zn). For example, the coating layer may be formed by plating nickel (Ni) onto the at least a portion of the upper surface of the cap plate. The coating layer may be disposed between the cap plate and the insulator. Accordingly, the coupling between the cap plate and the insulator may be improved, and thus the coupling between the components of the cap assembly may be improved. In some embodiments, the terminal plate may include a body part and the inserting part which protrudes from the body part and is inserted into the through hole. A center of the inserting part may coincide with a center of the terminal plate. The terminal plate may include aluminum (Al), but the present invention is not limited thereto. In some embodiments, a hole may be formed in a center of the insulator, and the inserting part may pass through the hole of the insulator. A diameter of the hole of the insulator may be larger than the diameter of the inserting part. In some embodiments, the hole of the insulator may face the through hole. The diameter of the hole of the insulator may be larger than the diameter of the through hole. In other embodiments, the diameter of the hole of the insulator may be the same as the diameter of the through hole. In some embodiments, the insulator may include a polymer material. The polymer material may have high chemical stability and high corrosion resistance and may block electrical conductivity to electrically insulate between the cap plate and the terminal plate. In relation to the above-described property, the material for the insulator may include at least any one of polypropylene (PP), polyamide (PA), polyimide(PI), a ceramic-coated insulator, and polyethylene terephthalate (PET).

**Next,** the cap plate and the terminal plate with the insulator interposed therebetween may be pressed to be joined (S1120).

Next, a filler may be disposed in at least a portion of a space in which the inserting part inserted into the through hole is surrounded with the insulator and the cap plate (S1130). The filler may include a polymer series material which non-reacts with the electrolyte and has insulation. For example, the filler may include at least any one of an epoxy resin, polypropylene (PP), polyethylene terephthalate (PET), and polystyrene (PS). For example, the filler may be formed by applying and then hardening an epoxy resin to the at least a portion of the space in which the inserting part inserted into the through hole is surrounded with the insulator and the cap plate. Accordingly, the filler may be easily disposed, and thus a manufacturing time and cost of the cap assembly may be reduced.

In some embodiments, the disposing of the filler (S1130) may include forming the filler by applying and then hardening a filler material to the at least a portion of the space in which the inserting part inserted into the through hole is surrounded with the insulator and the cap plate.

Finally, an insulating washer may be disposed on a lower side of the cap plate (S1140). For example, an inner end of the insulating washer may be disposed on an inner side more than an inner end of the cap plate. The phrase "inner side" may mean a direction approaching the inserting part. Accordingly, the electrolyte may be prevented from being introduced into the space in which the inserting part inserted into the through hole is surrounded with the insulator and the cap plate.

The flowchart of FIG. 11 and detailed description therefor may be merely an example of the present invention, and the scope of the present invention is not limited to the flowchart of FIG. 11 and the detailed description therefor. For example, one or more processes in the flowchart and the detailed description therefor may be added/changed/deleted, an order of one or more processes may be changed, and one or more processes may be simultaneously performed.

Although the present invention has been described above with respect to embodiments thereof, the present invention is not limited thereto. Various modifications and variations can be made thereto by those skilled in the art within the spirit of the present invention and the equivalent scope of the appended claims.

### [DESCRIPTION OF SOME REFERENCE SYMBOLS]

| | | | |
|---|---|---|---|
| 200: | secondary battery | 220: | case |
| 210: | cap assembly | 230: | electrode assembly |
| 212: | cap plate | 232: | first electrode |
| 213: | coating layer | 234: | second electrode |
| 214: | insulator | 235: | separator |
| 216: | terminal plate | 236: | first electrode tab |
| 218: | insulating washer | 238: | second electrode tab |

## Claims

1. A cap assembly (110, 210, 510, 610, 710, 810, 910, 920, 930, 940, 1010, 1020) comprising:
a cap plate (212, 312, 412, 512, 912, 922, 932, 942, 1012, 1022) having a through hole and the cap plate (212, 312, 412, 512, 912, 922, 932, 942, 1012, 1022) comprising a coating layer (213, 313, 513, 913, 923, 933, 934, 1013, 1023) disposed on at least a portion of an upper surface of the cap plate (212, 312, 412, 512, 912, 922, 932, 942, 1012, 1022);
a terminal plate (216, 316, 516, 916, 926, 936, 946, 1016, 1026) comprising a body part (216a, 316a, 416a, 516a, 916a, 926a, 936a, 946a) and an inserting part (216b, 316b, 416b, 516b, 916b, 926b, 936b, 946b), the inserting part (216b, 316b, 416b, 516b, 916b, 926b, 936b, 946b) protruding from the body part (216a, 316a, 416a, 516a, 916a, 926a, 936a, 946a) and is inserted into the through hole;
an insulator (214, 314, 414, 514, 914, 924, 934, 944, 1014, 1024) interposed between the cap plate (212, 312, 412, 512, 912, 922, 932, 942, 1012, 1022) and the terminal plate (216, 316, 516, 916, 926, 936, 946, 1016, 1026); and
a filler (219, 519, 719, 939, 949, 1029) disposed in at least a portion of a space in which the inserting part (216b, 316b, 416b, 516b, 916b, 926b, 936b, 946b) inserted into the through hole is surrounded with the insulator (214, 314, 414, 514, 914, 924, 934, 944, 1014, 1024) and the cap plate (212, 312, 412, 512, 912, 922, 932, 942, 1012, 1022).

2. The cap assembly (110, 210, 510, 610, 710, 810, 910, 920, 930, 940, 1010, 1020) as claimed in claim 1, wherein the coating layer (213, 313, 513, 913, 923, 933, 934, 1013, 1023) comprises nickel (Ni).

3. The cap assembly (210, 510, 610, 710, 810, 930, 940, 1020) as claimed in claim 1 or 2, wherein the filler (219, 519, 719, 939, 949, 1029 ) is in contact with at least a portion of an inner side surface of the insulator (214, 514, 934, 944, 1024) and at least a portion of the upper surface of the cap plate (212, 512, 932, 942, 1022), the filler (219, 519, 719, 939, 949, 1029) surrounding at least a portion of a side surface of the inserting part (216b, 516b, 936b, 946b).

4. The cap assembly (510, 610) as claimed in any of the preceding claims, wherein a lower end of the filler (519) is positioned to correspond to an upper end of the cap plate (512).

5. The cap assembly (210, 710, 810, 930, 940, 1029) as claimed in any of the claims 1 to 3, wherein the filler (219, 719, 939, 949, 1029) is further disposed to be in contact with at least a portion of an inner side surface of the cap plate (212, 512, 932, 942, 1022), the filler (219, 719, 939, 949, 1029) surrounding at least a portion of the side surface of the inserting part (216b, 516b, 936b, 946b).

6. The cap assembly (210, 710, 810, 930, 940, 1029) as claimed in claim 5, wherein a lower end of the filler (219, 719, 939, 949, 1029) is positioned to correspond to a lower end of the cap plate (212, 512, 932, 942, 1022).

7. The cap assembly (210, 510, 610, 710, 810, 910, 920, 930, 940, 1010, 1020) as claimed in any of the preceding claims, wherein the filler (219, 519, 719, 939, 949, 1029) comprises at least one of an epoxy resin, polypropylene (PP), polyethylene terephthalate (PET), and polystyrene (PS).

8. The cap assembly (510, 810, 1010) as claimed in any of the preceding claims, further comprising an insulating washer (518, 818, 1018) disposed on a lower side of the cap plate (512, 1012),
wherein an inner end of the insulating washer (518, 818, 1018) is positioned to correspond to an inner end of the cap plate (512, 1012).

9. The cap assembly (210, 610, 710, 940, 1020) as claimed in any of the claims 1 to 7, further comprising an insulating washer (218, 618, 718, 948, 1028) disposed on a lower side of the cap plate (212, 512, 942, 1022),
wherein an inner end of the insulating washer (218, 618, 718, 948, 1028) is positioned in an inner side of an inner end of the cap plate (212, 512, 942, 1022).

10. A method for manufacturing a cap assembly (210, 510, 610, 710, 810, 910, 920, 930, 940, 1010, 1020), the method comprising:
interposing an insulator (214, 314, 414, 514, 914, 924, 934, 944, 1014, 1024) between a cap plate (212, 312, 412, 512, 912, 922, 932, 942, 1012, 1022) in which a through hole is formed and a terminal plate (216, 316, 516, 916, 926, 936, 946) comprising an inserting part (216b, 316b, 416b, 516b, 916b, 926b, 936b, 946b) which protrudes to be inserted into the through hole;
coupling the cap plate (212, 312, 412, 512, 912, 922, 932, 942, 1012, 1022) and the terminal plate (216, 316, 516, 916, 926, 936, 946) by pressing the cap plate (212, 312, 412, 512, 912, 922, 932, 942, 1012, 1022) and the terminal plate (216, 316, 516, 916, 926, 936, 946) with the insulator (214, 314, 414, 514, 914, 924, 934, 944, 1014, 1024) interposed therebetween; and
disposing a filler (219, 519, 719, 939, 949, 1029) in at least a portion of a space in which the inserting part (216b, 316b, 416b, 516b, 916b, 926b, 936b, 946b) inserted into the through hole is surrounded with the insulator (214, 314, 414, 514, 914, 924, 934, 944, 1014, 1024) and the cap plate (212, 312, 412, 512, 912, 922, 932, 942, 1012, 1022).

11. The method as claimed in claim 10, wherein the disposing of the filler (219) comprises forming the filler (219, 519, 719, 939, 949, 1029) by applying and hardening a filler material to the at least a portion of the space in which the inserting part (216b, 516b, 936b, 946b) inserted into the through hole is surrounded with the insulator (214, 514, 934, 944, 1024) and the cap plate (212, 512, 942, 942, 1022).

12. The method as claimed in claim 10 or 11, wherein the cap plate (212, 312, 412, 512, 912, 922, 932, 942, 1012, 1022) includes a coating layer (213, 313, 513, 913, 923, 933, 934, 1013, 1023) disposed on at least a portion of an upper surface of the cap plate (212, 312, 412, 512, 912, 922, 932, 942, 1012, 1022).

13. The method as claimed in any of the claims 10 to 12, wherein the coating layer (213, 313, 513, 913, 923, 933, 934, 1013, 1023) includes at least any one of nickel (Ni), chromium (Cr), titanium (Ti), copper (Cu), palladium (Pd), and zinc (Zn).

14. The method as claimed in any of the claims 10 to 13, wherein the filler (219, 519, 719, 939, 949, 1029) includes at least any one of an epoxy resin, polypropylene (PP), polyethylene terephthalate (PET), and polystyrene (PS).

15. The method as claimed in any of the claims 10 to 14, further comprising disposing an insulating washer (218, 518, 618, 718, 818, 948, 1018, 1028) on a lower side of the cap plate (212, 512, 942, 1012, 1022).
